# FASCICULE DE BREVET EUROPEEN

(11) **EP 4 338 807 B1**
(45) Date de publication et mention de la délivrance du brevet: **19.03.2025**
(21) Numéro de dépôt: 23194746.6
(22) Date de dépôt: 31.08.2023
(51) Int. Cl.: A62B 1/14, A62B 1/10, A62B 35/00

(54) **DISPOSITIF DE DÉTECTION D'UNE VITESSE SEUIL D'UN DISPOSITIF DE BLOCAGE, DISPOSITIF DE BLOCAGE ET PROCÉDÉ DE BLOCAGE D'UN ÉLÉMENT FILAIRE**
VORRICHTUNG ZUR ERFASSUNG EINER SCHWELLENGESCHWINDIGKEIT EINER SPERRVORRICHTUNG, SPERRVORRICHTUNG UND VERFAHREN ZUM BLOCKIEREN EINES DRAHTELEMENTS
DEVICE FOR DETECTING A THRESHOLD SPEED OF A LOCKING DEVICE, LOCKING DEVICE AND METHOD FOR LOCKING A WIRE ELEMENT

(30) Priorité: 19.09.2022 FR 2209400
(43) Date de publication de la demande: 20.03.2024
(73) Titulaire: Zedel, 38920 Crolles (FR)
(72) Inventeur: TARRAJAT, Jules, 38500 VOIRON (FR); CHAUMONTET, Michael, 38920 CROLLES (FR)
(74) Mandataire: Talbot, Alexandre

(56) Documents cités:
- EP-A2- 2 777 773
- EP-B1- 2 958 635
- CN-A- 114 941 667

## Description

### Domaine technique

L'invention est relative à un dispositif de détection d'une vitesse seuil d'un dispositif de blocage de corde, un dispositif de blocage et un procédé de blocage d'une corde.

### Technique antérieure

Lors d'une intervention en hauteur, pour assurer la sécurité de la personne qui intervient, il est nécessaire de la connecter à une corde qui fait ligne de vie. La personne est accrochée à un dispositif antichute qui circule le long de la ligne de vie. Le dispositif antichute possède un galet rotatif qui est configuré pour tourner dans un sens ou dans un autre selon que la personne monte ou descend.

Lors d'une chute, la vitesse verticale du dispositif antichute le long de la ligne de vie atteint une valeur seuil ce qui correspond à une vitesse de rotation seuil d'un galet par rapport à une platine du dispositif antichute. Lorsque la vitesse de rotation seuil est atteinte, le galet se bloque ce qui a pour effet de bloquer le dispositif antichute sur la ligne de vie. La personne accrochée au dispositif antichute est alors arrêtée dans sa chute.

Pour former un dispositif antichute efficace et agréable à utiliser, il est important que le dispositif antichute puisse suivre fidèlement la progression du cordiste, c'est-à-dire que le dispositif antichute se déplace avec un faible frottement dans un sens ou dans l'autre. Il est également important que le dispositif antichute détecte efficacement la vitesse de circulation du dispositif antichute le long de la ligne de vie ce qui correspond à un contact important entre le galet et la ligne de vie et donc à un frottement non négligeable. Une configuration de dispositif antichute est commercialisée par la demanderesse sous la dénomination « ASAP ».

Une configuration de dispositif antichute est divulguée dans le document US 2014/0196985 ainsi que dans le document US 2014/0196989. Les documents CN 114 941 667 A, EP 2 958 635 B et EP 2 777 773 A divulguent également des dispositifs anti-chute de l'art antérieur.

Le document US 2014/0262611 divulgue une configuration où un galet tourne jusqu'à ce qu'il atteigne une vitesse de rotation seuil. Une fois la vitesse de rotation seuil atteinte, le galet se bloque. Le galet est monté à rotation autour d'un arbre de rotation. Deux pions sont montés mobiles à l'intérieur du galet et sont chacun actionnés par un ressort qui est configuré pour les ramener vers l'axe de rotation. Lorsque la vitesse de rotation du galet augmente, la force centrifuge tend à écarter les pions vers l'extérieur de manière à venir en contact de bloqueurs. Une fois les pions en contact des bloqueurs, le galet ne peut plus tourner. Chacun des pions possède une surface de contact avec le bloqueur qui s'étend sur toute la hauteur du pion et sur toute la hauteur du bloqueur. Le bloqueur et le pion sont disposés hors du galet ce qui correspond à un dispositif relativement encombrant.

Pour obtenir un dispositif antichute efficace, il est nécessaire d'avoir une bonne détection de la vitesse de rotation du galet de manière à détecter efficacement que la vitesse seuil est atteinte. Cela se traduit naturellement par la formation d'un dispositif antichute de taille importante afin d'avoir une bonne réactivité lors des variations de vitesse.

### Objet de l'invention

Un objet de l'invention consiste à prévoir un dispositif de détection configuré pour détecter la vitesse de rotation d'un galet d'un dispositif de blocage de corde qui présente un meilleur compromis entre l'encombrement du dispositif de détection et la sensibilité de la détection de vitesse.

Selon un aspect de l'invention, il est proposé un dispositif de détection configuré pour détecter la vitesse de rotation d'un galet d'un dispositif de blocage d'un élément filaire comportant :
- un galet monté rotatif autour d'un premier arbre de rotation, le premier arbre de rotation définissant un premier axe de rotation pour le galet, le premier arbre de rotation étant fixé à un corps ;
- un bloqueur fixé au corps et ayant une première surface de contact ;
- au moins un pion fixé au galet de manière à tourner autour du premier axe de rotation entre le premier axe de rotation et le bloqueur, le au moins un pion possédant une deuxième surface de contact, le au moins un pion étant monté mobile par rapport au premier axe de rotation entre une première position de pion où la deuxième surface de contact n'est pas destinée à faire obstacle à la rotation du au moins un pion et une deuxième position de pion où la deuxième surface de contact est destinée à venir en contact avec la première surface de contact, la rotation du galet générant une force centrifuge destinée à éloigner la deuxième surface de contact du premier axe de rotation et déplacer le pion vers la deuxième position de pion de sorte que la deuxième surface de contact soit en contact de la première surface de contact lorsque la vitesse de rotation du galet atteint une vitesse de rotation seuil, le bloqueur bloquant un sens de rotation du galet lorsque la première surface de contact est en contact de la deuxième surface de contact. Le dispositif de détection est remarquable en ce que le pion possède une portion masselotte et un élément de cliquet disposés l'un après l'autre selon une direction parallèle au premier axe de rotation, l'élément de cliquet comportant la deuxième surface de contact ; en ce que, dans la deuxième position de pion, la portion masselotte est dépourvue de contact avec le bloqueur ; et en ce que une partie distale de la portion masselotte est plus éloignée du premier axe de rotation qu'une partie distale de la deuxième surface de contact dans une observation selon le premier axe de rotation.

De manière avantageuse, dans la première position de pion, une distance radiale entre le premier axe de rotation et la partie distale de la portion masselotte est supérieure à une distance radiale entre le premier axe de rotation et une partie proximale de la première zone de blocage.

Dans une configuration particulière, le galet est creux et le bloqueur est disposé à l'intérieur du galet.

Dans un développement avantageux, le pion est monté mobile à rotation autour d'un deuxième arbre de rotation entre la première position de pion et la deuxième position de pion, le deuxième arbre de rotation étant monté mobile à rotation autour du premier arbre de rotation à l'intérieur du galet.

Préférentiellement, le pion est monté mobile à rotation autour d'un deuxième arbre de rotation entre la première position de pion et la deuxième position de pion. Une butée est montée fixement au galet, la butée étant en contact de l'élément de cliquet lorsque le pion est dans la deuxième position de pion pour réduire la sollicitation mécanique sur le deuxième arbre de rotation.

Selon un mode de réalisation, l'élément de cliquet et le deuxième arbre de rotation définissent un jeu fonctionnel au moins selon un arc de cercle dont le premier axe de rotation est le centre pour réduire la sollicitation mécanique sur le deuxième arbre de rotation.

Dans un développement avantageux, le corps comporte un premier flasque et un deuxième flasque, le premier arbre de rotation étant fixé au premier flasque et au deuxième flasque, le galet étant disposé entre le premier flasque et le deuxième flasque. Le bloqueur est monté fixement sur le deuxième flasque.

Préférentiellement, le dispositif de détection comporte :
- un téton en saillie du pion selon une direction parallèle au premier axe de rotation ;
- un bouton fixé au corps et monté mobile entre une première position de bouton et une deuxième position de bouton, le bouton possédant une glissière.

Dans la première position de bouton, la glissière est disposée pour ne pas former obstacle à la rotation du téton autour du premier axe de rotation.

Dans la deuxième position de bouton, lors d'un tour du galet, le téton glisse le long de la glissière en déplaçant le pion au moins jusqu'à une position de pion où la distance entre le premier axe de rotation et la partie distale de la deuxième zone de contact soit supérieure à la distance entre le premier axe de rotation et la partie proximale de la première zone de contact.

Dans un autre développement avantageux, dans la deuxième position de pion et dans la deuxième position de bouton, le téton n'est pas en contact de la glissière.

Préférentiellement, la portion masselotte est disposée à l'intérieur du galet.

De manière avantageuse, la portion masselotte est montée fixement par rapport à la deuxième surface de contact.

L'invention a également pour objet un dispositif de blocage d'un élément filaire comportant un dispositif de détection selon l'une quelconque des configurations précédentes. Un tel dispositif de blocage est plus compact que les configurations de l'art antérieur sans dégrader l'efficacité à détecter la vitesse de rotation seuil pour bloquer le galet.

L'invention a encore pour objet un procédé de blocage d'un élément filaire qui permet de détecter efficacement et répétablement la vitesse de rotation seuil afin de pouvoir bloquer le galet.

On tend à atteindre ce résultat au moyen d'un procédé de blocage d'une corde comportant les étapes suivantes :
- fournir un dispositif de blocage selon la configuration précédente et un élément filaire monté dans le dispositif de blocage en contact avec le galet ;
- faire circuler l'élément filaire à l'intérieur du dispositif de blocage de manière à faire tourner le galet jusqu'à une vitesse de rotation seuil pour bloquer le galet et bloquer l'élément filaire à l'intérieur du dispositif de blocage.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre schématiquement une vue en perspective d'un dispositif de blocage de corde ;
- la figure 2 illustre schématiquement une vue de coupe transversale d'un dispositif de blocage de corde ;
- la figure 3 illustre schématiquement une vue en perspective d'un dispositif de détection de vitesse d'un dispositif de blocage de corde ;
- la figure 4 illustre schématiquement une vue en perspective d'un dispositif de détection de vitesse d'un dispositif de blocage de corde avec un pion dans une position qui autorise la rotation du galet ;
- la figure 5 illustre schématiquement une vue en perspective d'un dispositif de détection de vitesse d'un dispositif de blocage de corde avec un pion dans une position qui autorise la rotation du galet et avec le bloqueur installé ;
- la figure 6 illustre schématiquement une vue en perspective d'un dispositif de détection de vitesse d'un dispositif de blocage de corde dans une position de pion qui bloque la rotation du galet et avec le bloqueur installé ;
- la figure 7 illustre schématiquement une vue en perspective d'un dispositif de détection de vitesse d'un dispositif de blocage de corde avec un pion dans une position qui bloque la rotation du galet et sans le bloqueur installé ;
- la figure 8 illustre schématiquement une vue en perspective d'une coupe transversale d'un dispositif de détection de vitesse d'un dispositif de blocage de corde dans une position de pion qui bloque la rotation du galet avec le bloqueur installé et un bouton de blocage du galet dans la position qui autorise la rotation du galet avec une vue en coupe des platines, du premier arbre de rotation et d'un bouton de blocage ;
- la figure 9 illustre schématiquement une vue de dessus d'un dispositif de détection de vitesse d'un dispositif de blocage de corde avec une glissière dans une position qui autorise la rotation du galet ;
- la figure 10 illustre schématiquement une vue de dessus d'un dispositif de détection de vitesse d'un dispositif de blocage de corde avec une glissière dans une position qui est destinée à entrainer le blocage de la rotation du galet ;
- la figure 11 illustre schématiquement une vue de dessus d'un dispositif de détection de vitesse d'un dispositif de blocage de corde avec une glissière dans une position qui est destinée à bloquer la rotation du galet et le téton qui glisse le long de la glissière ;
- la figure 12 illustre schématiquement une vue de dessus d'un dispositif de détection de vitesse d'un dispositif de blocage de corde avec une glissière dans une position qui est destinée à bloquer la rotation du galet et la glissière qui pousse le pion dans la position de blocage ;
- la figure 13 illustre schématiquement une vue de dessus un autre mode de réalisation d'un dispositif de détection de vitesse d'un dispositif de blocage de corde avec le pion dans la première position de pion ;
- la figure 14 illustre schématiquement une vue de dessus un autre mode de réalisation d'un dispositif de détection de vitesse d'un dispositif de blocage de corde avec le pion dans la seconde position de pion.

### Description des modes de réalisation

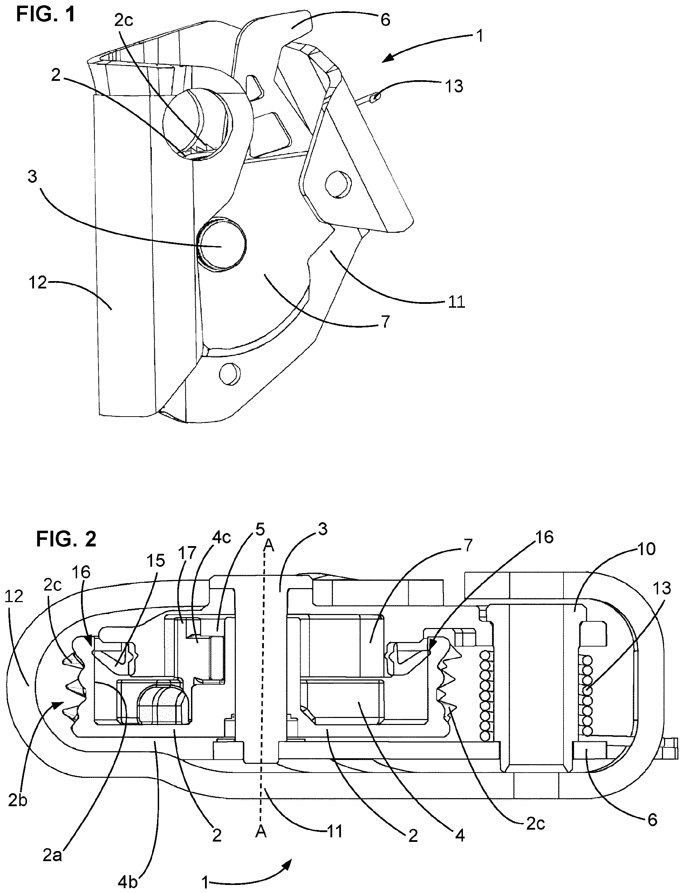

Les figures 1 à 14 illustrent différentes vues d'un dispositif de blocage 1 d'un élément filaire de préférence une corde. Le dispositif de blocage 1 est préférentiellement un dispositif antichute. Le dispositif de blocage de corde comporte un galet 2 monté mobile en rotation dans au moins un premier sens de rotation autour d'un premier arbre de rotation 3. Le premier arbre de rotation 3 définit un premier axe de rotation pour le galet 2. Le dispositif de blocage 1 définit un chemin destiné au passage d'une corde. Le chemin définit un passage traversant dont une paroi est formée par le galet 2 de sorte que le coulissement de la corde dans le dispositif de blocage cause la rotation du galet 2.

Le dispositif de blocage de corde est configuré pour bloquer la rotation du galet 2 dans au moins le premier sens de rotation lorsque la vitesse de rotation du galet 2 autour du premier axe de rotation atteint une valeur seuil. De manière préférentielle, le galet 2 est configuré pour tourner librement dans les deux sens de rotation au moins lorsque la vitesse de rotation est inférieure à la valeur seuil.

Le dispositif de blocage de corde comporte un dispositif de détection configuré pour détecter la vitesse de rotation du galet 2 selon un sens de rotation. Le dispositif de détection est configuré pour autoriser la rotation du galet 2 lorsque la vitesse de rotation dans le premier sens de rotation est inférieure à la vitesse seuil et pour empêcher la rotation du galet 2 lorsque la vitesse de rotation du galet 2 dans le premier sens de rotation atteint la vitesse seuil. Lorsque le dispositif de détection détecte que la vitesse de rotation dans le premier sens de rotation correspond à la vitesse seuil, le galet 2 se bloque ce qui a pour effet de bloquer la corde éventuellement présente dans le dispositif de blocage de corde.

Le dispositif de détection comporte le galet 2 et le premier arbre de rotation 3 qui définit le premier axe de rotation du galet 2. Le galet 2 est fixé au premier arbre de rotation 3. Le premier arbre de rotation 3 traverse le galet 2 ou s'enfonce dans le galet 2 de sorte que le galet 2 tourne autour du premier arbre de rotation 3. Le premier arbre de rotation 3 est fixé à un corps.

Le dispositif de détection comporte au moins un pion 4 qui est fixé au galet 2. Lorsque le galet 2 tourne autour du premier axe de rotation AA, le pion 4 tourne autour du premier axe de rotation. Le pion 4 est également monté mobile par rapport au premier axe de rotation de manière à pouvoir se rapprocher ou s'éloigner du premier axe de rotation AA. De manière préférentielle, le dispositif de détection comporte un, deux, trois ou quatre pions 4. Avantageusement, les pions 4 travaillent indépendamment les uns des autres. Dans le mode de réalisation illustré, un seul pion 4 est utilisé.

Le dispositif de détection comporte un bloqueur 5. Le bloqueur 5 est monté fixement à un corps. Le bloqueur 5 possède une première surface de contact 5a et le au moins un pion 4 possède une deuxième surface de contact 4a destinée à venir en contact de la première surface de contact 5a pour bloquer la rotation du galet 2. Chaque pion 4 est monté mobile de sorte que la première surface de contact 5a se rapproche ou s'éloigne de la deuxième surface de contact 4a. Le pion 4 se déplace dans un plan perpendiculaire au premier axe de rotation AA. La première surface de contact 5a et la deuxième surface de contact 4a sont traversé par un même plan perpendiculaire au premier axe de rotation AA.

Le centre de gravité du pion 4 est décalé du premier axe de rotation AA de sorte que la rotation du galet 2 autour du premier axe de rotation AA entraine la rotation du pion 4 autour du premier axe de rotation AA et la génération d'une force centrifuge qui tend à écarter la deuxième surface de contact 4a du premier axe de rotation. Plus la vitesse de rotation du galet 2 autour du premier axe de rotation AA est importante, plus la vitesse de rotation du au moins un pion 4 est importante et plus la deuxième surface de contact 4a s'éloigne du premier axe de rotation AA pour que la deuxième surface de contact 4a se rapproche de la première surface de contact 5a.

Le au moins un pion 4 est monté mobile par rapport au premier axe de rotation AA entre une première position et une deuxième position.

Le bloqueur 5 est configuré pour empêcher la rotation du galet 2 autour du premier axe de rotation dans le premier sens de rotation lorsque la première surface de contact 5a est en contact avec la deuxième surface de contact 4a. Lorsque la vitesse de rotation du galet 2 atteint une valeur seuil, la force générée sur le au moins un pion 4 est telle que la deuxième surface de contact 4a vient en contact de la première surface de contact 5a ce qui bloque la rotation du au moins un pion 4 et donc ce qui bloque la rotation du galet 2 au moins dans le premier sens de rotation. Lorsque le pion 4 est au contact du bloqueur 5, le bloqueur 5 empêche la rotation du galet 2 dans le premier sens de rotation. Lorsque le pion 4 est dans la deuxième position de pion, il est préférable que le pion 4 soit en contact de la paroi latérale interne du galet 2. Dans un mode de réalisation avantageux, la portion de masselotte 4b et l'élément cliquet 4c sont montés fixement l'un à l'autre et ils font avantageusement partie d'un pion monolithique.

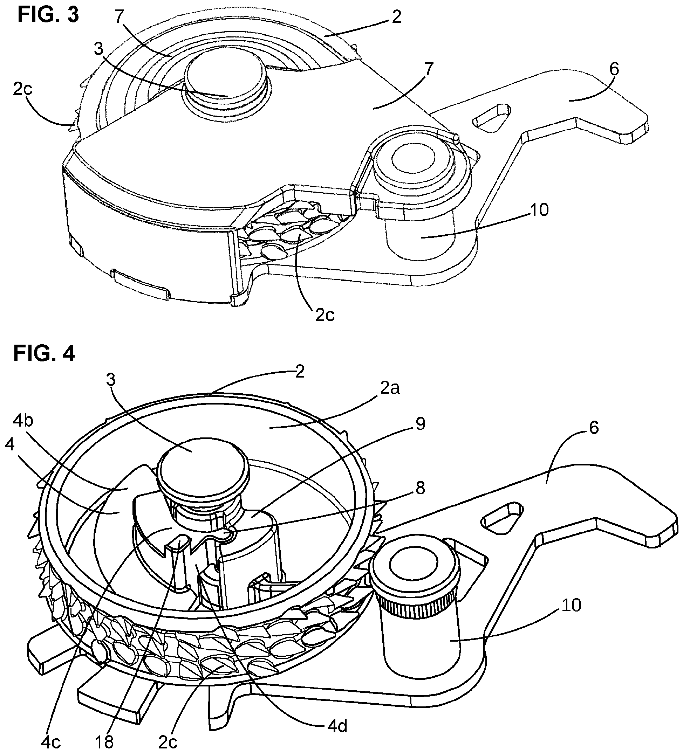

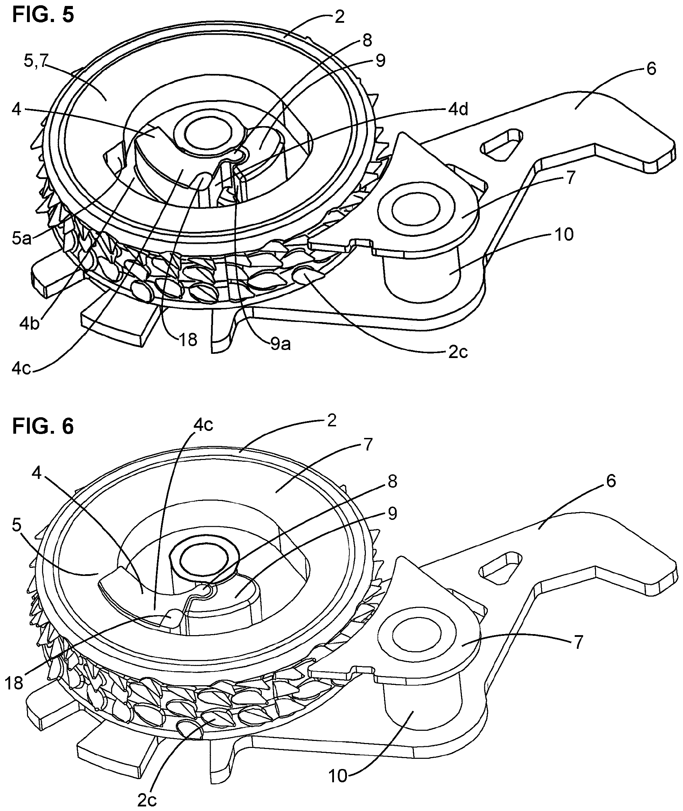

Dans la première position de pion illustrée aux figures 4 et 5, la deuxième surface de contact 4a du au moins un pion 4 n'est pas en contact avec la première surface de contact 5a du bloqueur 5. En d'autres termes, une première distance entre le premier axe de rotation AA et une partie distale de la deuxième zone de contact 4a est inférieure une deuxième distance entre le premier axe de rotation AA et une partie proximale de la première surface de contact 5a. Dans la deuxième position de pion illustrée aux figures 6 à 8, la deuxième surface de contact 4a du au moins un pion 4 est en contact avec la première surface de contact 5a du bloqueur 5. En d'autres termes, la première distance est supérieure à la deuxième distance.

Le dispositif de détection définit un volume annulaire qui est disposé entre le premier axe de rotation AA et le bloqueur 5. Tant que le pion se trouve à l'intérieur du volume annulaire, le pion 4 est en mesure de tourner. Lorsque le pion 4 déborde du volume annulaire, la rotation du pion 4 va se traduire par une mise en contact de la première surface de contact 4a avec la deuxième surface de contact 4a, ce qui va aboutir au blocage du galet 2.

Dans la première position de pion illustrée aux figures 4 et 5, la vitesse de rotation du galet 2 est telle que le bloqueur 5 ne s'oppose pas à la rotation du galet 2 dans le premier sens de rotation. Dans la deuxième position de pion illustrée aux figures 6 à 8, la vitesse de rotation du galet 2 a atteint la vitesse seuil et le pion 4 vient en appui contre le bloqueur 5 pour empêcher la rotation du galet 2 dans le premier sens de rotation.

Pour obtenir, un blocage efficace du galet 2, il est important que l'aire de la zone de contact entre le pion 4 et le bloqueur 5 soit supérieure à une valeur en dessous de laquelle les risques de glissement peuvent apparaitre ce qui empêche un bon blocage. Il est également important qu'en dessous de la vitesse de rotation seuil, le galet 2 et le pion 4 puissent tourner autour du premier axe de rotation AA sans que le pion 4 vienne en contact du bloqueur 5. Il est donc important qu'il existe un espacement conséquent entre le pion 4 et le bloqueur 5 lorsque le pion 4 et le bloqueur 5 sont disposés en vis-à-vis radialement et que le galet 2 est à l'arrêt ou à faible vitesse.

Il est particulièrement avantageux que la deuxième surface de contact 4a du pion 4 soit sollicitée par un ressort en direction du premier axe de rotation. La valeur de l'espacement ainsi que la raideur du ressort permettent de définir la valeur de la force centrifuge qui cause le déplacement du pion 4 telle que le pion 4 vient en appui sur le bloqueur 5 et donc cela définit la valeur de la vitesse seuil.

De manière avantageuse, le dispositif de détection possède un ressort qui est configuré pour solliciter le au moins un pion 4 de sorte que la deuxième surface de contact 4a s'éloigne de la première surface de contact 5a. Lorsque la vitesse de rotation du galet 2 atteint la valeur seuil, la force centrifuge appliquée sur le pion 4 est suffisamment importante pour s'opposer à la force générée par le ressort ce qui permet la mise en contact de la première surface de contact 5a avec la deuxième surface de contact 4a et le blocage du galet 2. Le ressort s'oppose à la force centrifuge appliquée sur le pion 4, c'est-à-dire applique une force dirigée vers l'axe de rotation AA. Le ressort est connecté d'une part au pion 4 et d'autre part au galet 2. Il est également possible de connecter le ressort au pion 4 et au premier arbre de rotation 3. Dans le mode de réalisation illustré aux différentes figures, le ressort est installé dans une cavité formée dans le pion 4, le ressort étant installé entre le pion 4 et le fond du galet 2.

Afin de réduire l'encombrement du dispositif de détection, on réduit l'écartement entre le pion 4 et le premier axe de rotation ce qui a pour effet de réduire la force centrifuge appliquée sur le pion 4. Cela a pour conséquence de moins bien définir la vitesse seuil de rotation qui cause le blocage du galet 2. Lorsque l'on rapproche le pion 4 du premier axe de rotation AA cela a également pour effet de réduire le volume du pion 4 et donc sa masse. Là encore, cette modification entraine une diminution de la force centrifuge et donc une diminution de la sensibilité du dispositif de détection vis-à-vis de la vitesse de rotation du galet 2. Lorsque la sensibilité du système de détection diminue, le blocage du galet 2 s'effectue sur une gamme de vitesse qui présente une distribution plus large autour de la vitesse seuil.

Pour augmenter la sensibilité de détection du dispositif de détection, il est nécessaire d'augmenter la masse du pion 4 et/ou la distance entre le premier axe de rotation et le centre de gravité du pion 4. Ces deux critères ne vont pas dans le sens d'une réduction de la taille du dispositif de détection.

Pour augmenter la sensibilité de détection de la vitesse de rotation du galet 2, il est avantageux d'augmenter la distance entre le centre de gravité du pion 4 et le premier axe de rotation AA. Pour obtenir un tel résultat sans augmenter l'encombrement du pion et donc sans augmenter l'encombrement du système de détection, il est particulièrement intéressant de former un pion 4 étagé, c'est-à-dire un pion qui possède une portion masselotte 4b et un élément de cliquet 4c disposés à deux étages différents selon le premier axe de rotation AA du galet.

L'élément de cliquet 4c possède la deuxième surface de contact 4a et la portion masselotte 4b est dépourvue de la deuxième surface de contact 4a. La portion masselotte 4b n'est pas destinée à venir en contact du bloqueur 5 pour bloquer la rotation du galet 2. La portion masselotte 4b et l'élément de cliquet 4c n'ont pas la même forme lors d'une observation selon une direction parallèle au premier axe de rotation AA. La portion masselotte 4b et l'élément de cliquet 4c sont disposés l'un à la suite de l'autre selon une direction parallèle au premier axe de rotation AA ou sensiblement parallèle au premier axe de rotation AA.

La partie distale de la portion masselotte 4b est plus éloignée du premier axe de rotation AA que la partie distale de la deuxième surface de contact 4a et d'une façon plus générale que la partie distale l'élément de cliquet 4c selon une direction radiale qui s'étend depuis le premier axe de rotation AA. Le centre de gravité de la portion masselotte 4b est plus éloigné du premier axe de rotation que le centre de gravité de l'élément cliquet 4c. Cela permet d'avoir une augmentation de la force centrifuge en comparaison d'un pion de section constante ou sensiblement constante sur toute la hauteur du pion 4 (selon la direction AA).

De manière préférentielle, la portion masselotte 4b possède une partie qui est en vis-à-vis de l'élément cliquet 4c dans une observation selon le premier axe de rotation AA, il est avantageux d'avoir un vis-à-vis égal à au moins 50% de la surface de l'élément cliquet 4c, de préférence au moins 75%. Préférentiellement, l'élément cliquet 4c est intégralement en vis-à-vis de la portion masselotte 4b dans une observation selon le premier axe de rotation AA.

De manière préférentielle, dans une observation selon le premier axe de rotation AA, la portion masselotte 4b possède une surface qui est au moins 30% supérieure à la surface de l'élément cliquet 4c. il est avantageux que l'élément cliquet 4c et la portion masselotte 4b se présentent sous la forme de deux arcs d'anneaux. Il est préférable que la portion masselotte 4b dépasse d'une ou des deux extrémités de l'élément cliquet 4c selon un arc de cercle dont le centre correspond au premier axe de rotation AA. Cela permet d'augmenter la masse du pion sans augmenter l'encombrement de l'élément cliquet 4c. cette configuration permet d'éloigner le centre de gravité en comparaison d'un pion 4 ne comportant que l'élément de cliquet 4c. La portion masselotte 4b appartenant à un plan distant de la première surface de blocage 5a, elle s'affranchit des obligations vis-à-vis de l'espacement entre la première surface de blocage 5a et la deuxième surface de blocage 4a lorsque le galet 2 doit tourner ou de l'aire minimal de contact entre l'élément de cliquet 4c et le bloqueur 5 lorsque le galet 2 doit être bloqué.

En comparaison de la configuration divulguée dans le document US 2014/0262611 où le pion est de forme identique sur toute la hauteur du pion, la portion masselotte 4b permet d'éloigner le centre de gravité et donc d'augmenter la force centrifuge pour une vitesse de rotation seuil donnée.

La configuration étagée du pion 4 avec une partie masselotte 4b qui est décalée par rapport à l'élément de cliquet 4c permet d'améliorer le compromis force centrifuge générée/encombrement.

Lorsque le pion 4 est dans la deuxième position, c'est-à-dire la position apte à bloquer le galet 2, la portion masselotte 4b se trouve à une distance du premier axe de rotation AA qui est supérieure à la distance qui sépare le premier axe de rotation AA et la zone de contact entre le pion 4 et le bloqueur 5.

De manière préférentielle, lorsque le pion 4 est dans la deuxième position avec l'élément de cliquet 4c en appui sur le bloqueur 5, il est avantageux que la portion masselotte 4b s'étende au-delà de l'élément de cliquet 4c sur une distance qui est égale à au moins 10% du rayon entre le premier axe de rotation AA et la partie distale de la zone de contact entre le bloqueur 5 et l'élément de cliquet 4c. Encore plus préférentiellement, la portion masselotte 4b s'étend au-delà de l'élément de cliquet 4c sur une distance qui est égale à au moins 20%.

Afin d'améliorer la compacité, il est particulièrement avantageux d'utiliser un galet 2 qui est creux et de disposer le pion 4 à l'intérieur du galet 2. Il est possible de former un dispositif de détection qui détecte mieux la vitesse seuil sans modifier le diamètre du galet 2. Le bloqueur 5 est au moins en partie disposé à l'intérieur du galet 2 ce qui permet de former un dispositif de détection particulièrement compact sans dégrader la sensibilité de détection de la vitesse de rotation du galet 2. Il est avantageux que la partie masselotte 4b et/ou l'élément cliquet 4c se trouvent à l'intérieur du creux du galet 2.

Lorsque le bloqueur 5 est installé dans le volume interne du galet 2 qui est creux 2, le bloqueur 5 ne forme pas un obstacle sur toute la hauteur du volume interne du galet. La hauteur est la dimension parallèle au premier axe de rotation AA. Le bloqueur 5 laisse un espace dans le galet 2 de manière à autoriser la rotation de la portion masselotte 4b au-dessus ou au-dessous du bloqueur 5. En d'autres termes, dans la première position de pion, une distance radiale entre le premier axe de rotation AA et la partie distale de la portion masselotte 4b est supérieure à une distance radiale entre le premier axe de rotation entre le premier axe de rotation AA et une partie proximale de la première surface de blocage 5a. La portion masselotte 4b peut alors tourner autour du premier axe de rotation AA et passer au-dessus ou au-dessous du bloqueur 5 selon une direction d'observation parallèle au premier axe de rotation AA lorsque le galet 2 tourne tant que la vitesse seuil n'est pas atteinte. Une fois la vitesse seuil atteinte, l'élément de cliquet 4c vient en appui sur le bloqueur 5 ce qui empêche la rotation de la portion masselotte 4b et la rotation du galet 2 selon le premier sens de rotation AA.

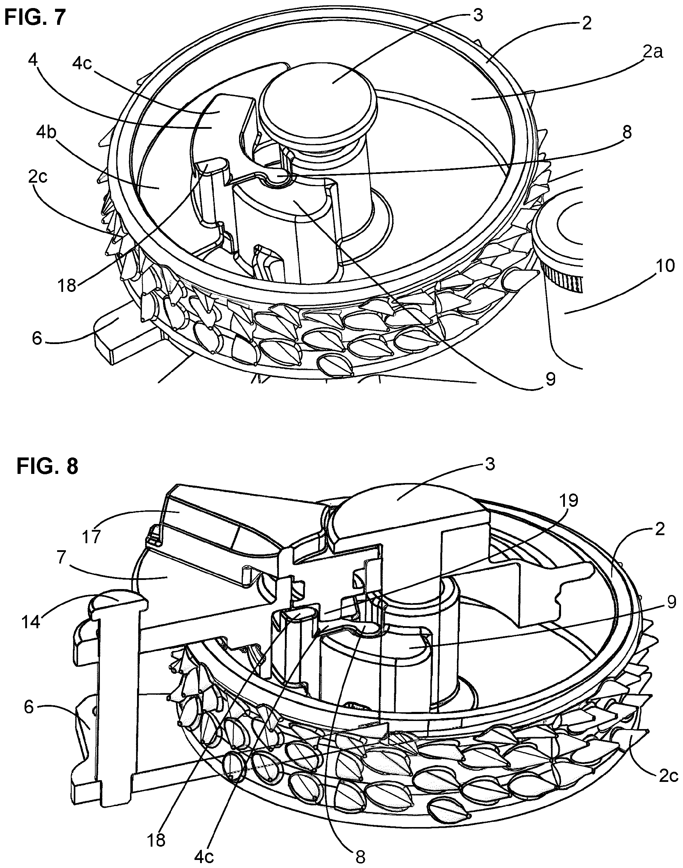

Dans un mode de réalisation particulier illustré à la figure 7, lorsque la première surface de contact 5a est en contact avec la deuxième surface de contact 4a, la portion masselotte 4b vient en contact de la paroi latérale interne 2a du galet 2. Il est avantageux que lorsque la portion masselotte 4b vient en contact de la paroi latérale interne 2a du galet 2, l'élément de cliquet 4c est inclus dans un cercle dont le rayon est égal à 2/3 du rayon défini par la paroi latérale interne 2a du galet 2 et le premier axe de rotation.

De manière particulièrement avantageuse, la portion masselotte 4b et l'élément de cliquet 4c sont montés fixement l'un à l'autre.

Dans un mode de réalisation particulier, lorsque la première surface de contact 5a n'est pas en contact avec la deuxième surface de contact 4a, la distance entre le premier axe de rotation AA et la partie distale de la portion masselotte 4b est supérieure ou égale à la distance entre le premier axe de rotation AA et la partie proximale de la première surface de contact 5a. Cette configuration permet d'augmenter l'effet de la force centrifuge sans dégrader la compacité du dispositif de détection.

De manière préférentielle, dans la première position de pion, la partie proximale de l'élément cliquet 4c est contre la paroi latérale du galet 2 définissant un trou de passage pour le premier arbre de rotation 3. Il est alors avantageux que la distance entre la partie distale de l'élément de cliquet 4c et le premier axe de rotation AA soit inférieure à égale à 2/3 du rayon entre le premier axe de rotation AA et la partie distale de la portion masselotte 4b. Cette configuration permet d'améliorer le rapport entre la sensibilité de détection de la vitesse et la compacité du dispositif de détection.

La partie distale de l'élément cliquet 4c est la partie de l'élément cliquet 4c la plus éloignée du premier axe de rotation. La partie distale de la portion masselotte 4b est la partie de portion masselotte 4b la plus éloignée du premier axe de rotation. Inversement, les parties proximales sont les parties les plus proches du premier axe de rotation AA. De préférence, la comparaison des distances entre les parties distales de l'élément cliquet 4c et de la portion masselotte 4b sont réalisées pour un même rayon. Il en va de même pour la comparaison entre les parties proximales ou entre les parties proximales et distales.

De manière particulièrement avantageuse, dans une observation selon le premier axe de rotation AA, la portion masselotte 4b s'étend radialement au-delà de la partie distale de l'élément de cliquet 4c et elle s'étend également de manière circonférentielle comme cela est illustré sur les différentes figures.

Préférentiellement, la portion masselotte 4b s'étend depuis chacune des deux extrémités circonférentielles de l'élément de cliquet 4c.

Dans une observation selon le premier axe de rotation, on constate que l'élément de cliquet 4c se trouve entre la partie saillante de la portion masselotte 4b et le premier axe de rotation AA.

De manière préférentielle, la portion masselotte 4b représente au moins 20% de la masse du pion 4. Encore plus préférentiellement, la portion masselotte représente au moins 33% de la masse du pion 4. La portion masselotte 4b et l'élément cliquet 4c sont séparés par un plan perpendiculaire au premier axe de rotation AA et qui passe par l'extrémité de la première surface de contact 5a et de la deuxième zone de contact 4a. La masse de la portion de masselotte correspond à la masse du pion se trouvant du côté du plan contenant la portion de masselotte alors que la masse de l'élément cliquet 4c correspond à la masse du reste du pion 4 et qui se trouve de l'autre côté du plan.

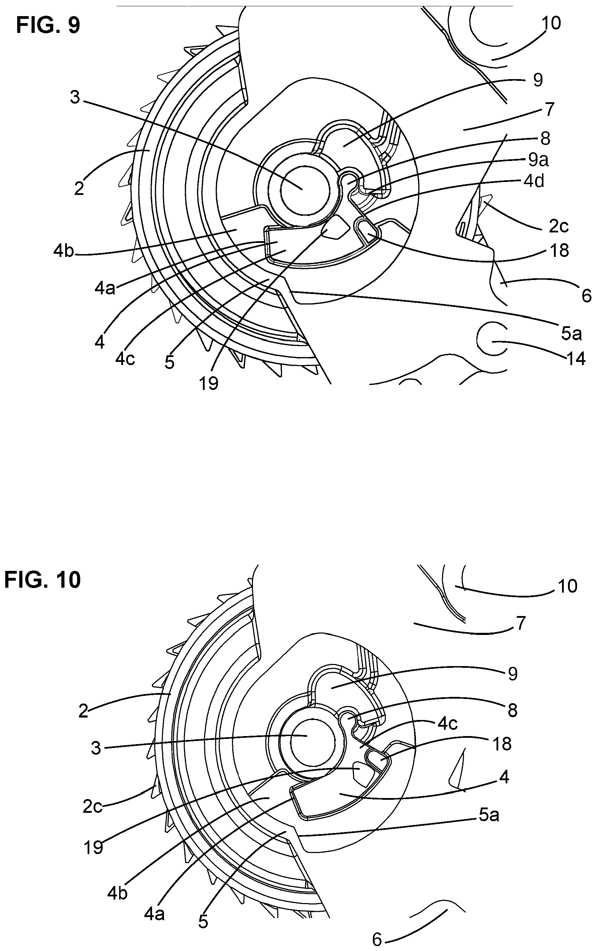

De manière préférentielle illustrée aux figures 9 à 13, dans la deuxième position de pion, c'est-à-dire dans la position apte à bloquer le galet 2, il est avantageux que le rayon entre le premier axe de rotation AA et la partie distale de la première surface de contact 5a soit inférieur ou égal à 75% du rayon entre le premier axe de rotation et la partie distale de la portion masselotte 4b. Avantageusement, le rayon entre le premier axe de rotation et la première zone de contact 5b est inférieur ou égal à 75% du rayon de la paroi latérale interne 2a du galet 2 lorsque le galet 2 est creux et reçoit le bloqueur 5 ainsi que le pion 4.

L'utilisation d'un galet 2 creux est particulièrement avantageuse car cela permet d'améliorer la compacité de la structure. De préférence, un plan perpendiculaire au premier axe de rotation AA passe par l'élément de cliquet 4c, le bloqueur 5 et la gorge 2b du galet 2 qui doit recevoir la corde.

L'amélioration de la compacité du dispositif de détection sans dégradation de la sensibilité de détection de la vitesse de rotation du galet 2 permet de réduire le diamètre du galet 2. En réduisant le diamètre du galet 2, pour une vitesse linéaire de corde donnée dans le dispositif de blocage, on augmente la vitesse de rotation du galet 2 et donc l'effet sur la force centrifuge. En d'autres termes, la décomposition du pion 4 en une portion masselotte 4b et un élément de cliquet 4c qui sont disposés l'un après l'autre selon une direction parallèle au premier axe de rotation permet de réduire le diamètre du galet 2 sans réduire la sensibilité de détection car il devient possible d'augmenter la vitesse de rotation du galet 2 pour une vitesse linéaire de corde donnée.

Cette configuration est particulièrement avantageuse car comme cela est illustré aux figures 1 à 14, le dispositif de détection 1 de la vitesse de rotation du galet 2 est intégralement ou quasi-intégralement installé à l'intérieur du galet 2.

Dans les modes de réalisation illustrés aux figures 1 à 3 et 8 à 14, le galet 2 est disposé entre une première platine 6 et une deuxième platine 7 du corps. Le premier arbre de rotation 3 est fixé à la première platine 6 et à la deuxième platine 7. Le galet 2 tourne autour du premier arbre de rotation 3 dans le corps et plus précisément entre les platines 6 et 7 qui sont fixes. Le galet 2 est une pièce borgne à l'exception du trou pour le passage du premier arbre de rotation 3. Le pion 4 est fixé au galet 2 pour suivre la rotation du galet 2 autour du premier axe de rotation AA. Il est avantageux que le pion 4 soit monté mobile en rotation entre la première position et la deuxième position, de préférence autour d'un deuxième arbre de rotation 8. De préférence, le deuxième arbre de rotation 8 est fixé au galet 2 de sorte que le deuxième arbre de rotation 8 tourne autour du premier arbre de rotation 3. Le pion 4 est fixé au deuxième arbre de rotation 8 de sorte que le pion 4 tourne autour du premier arbre de rotation 3 et tourne autour du deuxième arbre de rotation 8.

De manière avantageuse, dans la deuxième position de pion, le pion 4 vient en appui sur une butée 9 du galet 2 qui est décalée du deuxième arbre de rotation 8. Le pion 4 possède une troisième zone de contact 4d qui vient en appui sur une quatrième zone de contact 9a formée par la butée 9 lorsque le pion est dans la deuxième position de pion cela permet de réduire la sollicitation mécanique sur le deuxième arbre de rotation 8. Dans la deuxième position de pion, la butée 9 du galet 2 exerce une force sur le pion 4 et le pion 4 exerce une force sur le bloqueur 5 pour bloquer la rotation du galet 2 dans le premier sens de rotation sans trop solliciter le deuxième arbre de rotation 8. Le blocage de la butée 9 entraine le blocage du galet 2. La butée 9 du galet 2 est montée fixement par rapport au galet 2. Pour réaliser le blocage du galet 2, l'élément de cliquet 4c est d'une part en appui contre la butée 9 et d'autre part en appui contre le bloqueur 5. Dans la position bloquant la rotation du galet 2, l'élément de cliquet 4c se trouve entre la butée 9 et le bloqueur 5. Cette configuration permet de réduire les efforts appliqués sur le deuxième arbre de rotation 8. Préférentiellement, lorsque la troisième zone de contact 4d et la quatrième zone de contact sont des surfaces planes, elles forment un premier plan qui inclut le premier axe de rotation, comme cela est illustré sur les figures 9 à 14. L'appui est tangentiel ce qui limite la sollicitation sur le deuxième arbre de rotation. Il est également possible d'avoir des zones de contact texturés, par exemple en créneau ou en dents de scie pour réduire ou éviter l'apparition d'une force s'étendant radialement et qui sollicite le deuxième arbre de rotation 8.

Lorsqu'une butée 9 est utilisée, il est avantageux que le pion 4, plus préférentiellement l'élément de cliquet 4c, et le deuxième arbre de rotation 8 définissent un jeu fonctionnel selon une direction perpendiculaire à l'axe AA représentant l'axe de rotation du galet 2. De préférence, le jeu fonctionnel s'étend au moins selon un arc de cercle dont le rayon s'étend depuis l'axe de rotation AA du galet 2 et qui passe par le deuxième arbre de rotation 8. Avantageusement, l'arc de cercle a l'axe de rotation AA pour centre. L'introduction d'un jeu fonctionnel est particulièrement avantageuse de manière à ne pas solliciter mécaniquement le deuxième arbre de rotation 8 lorsque le pion 4 est en appui d'une part contre le bloqueur 5 et d'autre part contre la butée 9.

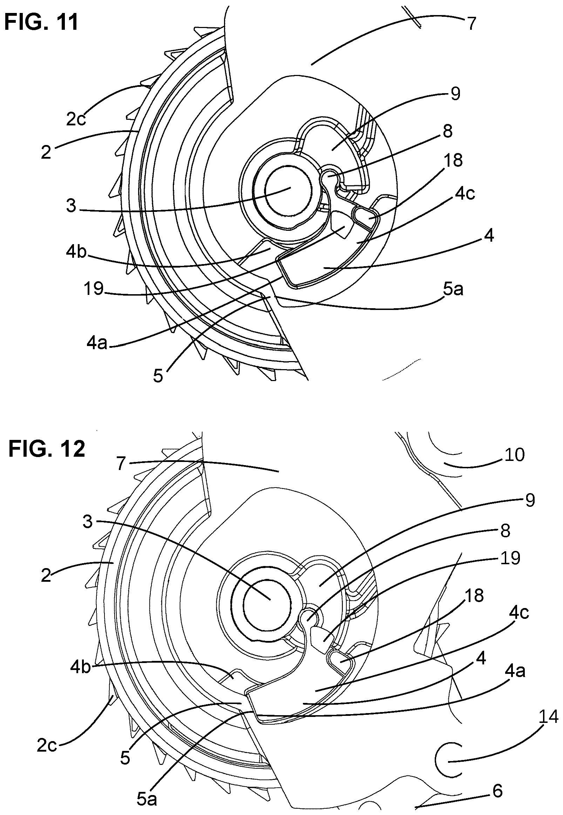

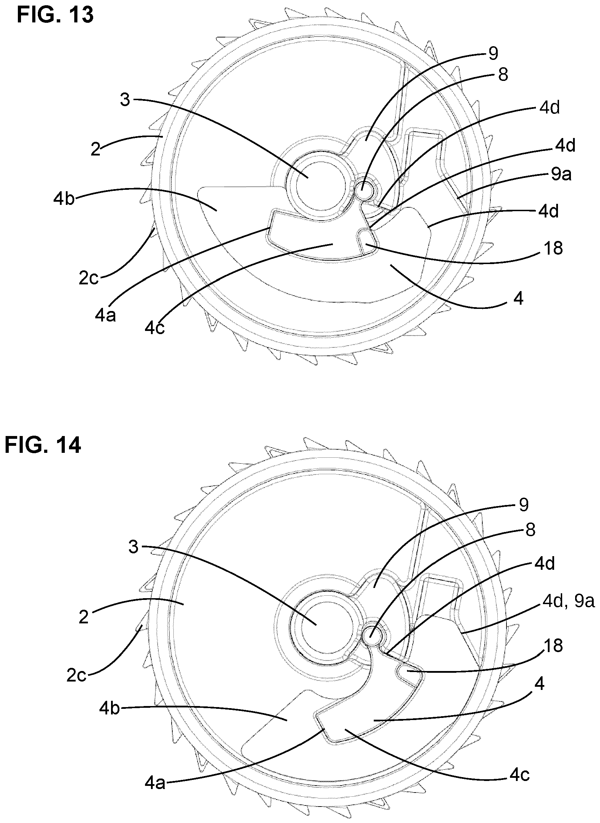

Afin de ne pas trop solliciter le deuxième arbre de rotation 8, il est préférable que dans la deuxième position de pion, le pion 4 prenne appui contre la paroi latérale périphérique du galet 2 comme cela est illustré aux figures 12 et 14.

Il est également avantageux que, dans la deuxième position de pion, la première surface de contact 5a et la deuxième zone de contact 4a définissent un deuxième plan parallèle au premier axe de rotation AA. Le premier plan est sécant au deuxième plan, le contact entre la troisième zone de contact 4d et la quatrième zone de contact 9a étant séparé de l'intersection entre le premier plan et le deuxième plan par le premier axe de rotation AA dans une observation selon le premier axe de rotation AA.

L'utilisation d'une butée 9 est particulièrement avantageuse en association avec un pion 4 étagé, mais il est également possible d'avoir une butée 9 qui bloque la rotation d'un galet 2 avec un pion selon l'une des configurations de l'art antérieur, notamment une configuration où la section du pion 4 est constante ou sensiblement constante sur toute la hauteur du pion. L'utilisation de la butée qui se trouve dans un arc de cercle qui ne passe pas

Dans le mode de réalisation illustré aux figures 1 à 12, la troisième zone de contact 4d est majoritairement ou exclusivement formée par l'élément de cliquet 4c. La troisième zone de contact 4d ne s'étend pas au-delà du rayon défini par la partie distale entre l'élément de cliquet 4c et l'axe de rotation du galet 2. Dans le mode de réalisation illustré aux figures 13 et 14, la troisième zone de contact 4d est formée dans l'élément de cliquet 4c ainsi que dans la partie masselotte 4b. Il est avantageux que la troisième zone de contact 4d soit formée par une face de la portion masselotte et préférentiellement à une distance plus importante que la zone de contact entre la butée et l'élément de cliquet 4c.

Il est avantageux que le deuxième arbre de rotation 8 soit disposé à un rayon depuis le premier axe de rotation AA qui est inférieur au rayon de la deuxième surface de contact 4a lorsque le pion 4 est dans la deuxième position de pion.

De manière préférentielle, la première platine 6 et la deuxième platine 7 du corps sont fixées l'une à l'autre au moyen d'un troisième arbre de rotation 10 qui est également fixé sur un support 11. Comme illustré à la figure 2, le troisième arbre de rotation 10 et le premier arbre de rotation 3 sont fixés l'un avec l'autre de manière à former un ensemble monobloc avec la première platine 6 et la deuxième platine 7. L'ensemble monobloc est monté mobile par rapport au support 11 et monté à rotation autour du troisième arbre de rotation 10. Le premier arbre de rotation 3 est monté mobile à pivotement autour du troisième arbre de rotation 10. L'ensemble monobloc pivote par rapport au support 11 de manière à définir une position ouverte qui autorise l'introduction ou le retrait d'une corde dans le support 11 du dispositif de blocage de corde, ici du dispositif antichute. Préférentiellement, le support 11 possède une zone en forme du U 12 qui définit un anneau destiné à recevoir une corde. L'anneau s'ouvre ou se referme au moyen de l'ensemble monobloc qui est mobile et notamment au moyen du galet 2 qui se déplace par rapport au support 11.

De manière préférentielle, l'ensemble monobloc est sollicité au moyen d'un second ressort 13 de sorte que l'ensemble monobloc soit par défaut, c'est-à-dire en l'absence de sollicitation extérieure, dans la position qui maintient la corde à l'intérieur du dispositif antichute et plus précisément à l'intérieur de la zone en forme de U 12. Le ressort sollicite le galet vers la zone en forme de U ce qui est destiné à appuyer la corde contre la zone de forme de U pour avoir un contact important entre la corde et le galet 2 lorsque le dispositif de blocage se déplace par rapport à la corde.

De manière préférentielle, le galet 2 possède une gorge 2b qui est texturée c'est-à-dire une gorge non-lisse. La gorge 2b peut être munie de picots 2c ou de rainures de manière à augmenter le frottement entre le galet 2 et la corde.

Avantageusement, la deuxième platine 7 définit le bloqueur 5 et s'enfonce dans le creux du galet 2. La deuxième platine 7 permet de bloquer la rotation du galet 2. La fixation de la deuxième platine 7 avec la première platine 6 au moyen du premier arbre de rotation 3 et du troisième arbre de rotation 10 permet de former un bloqueur 5 particulièrement efficace. Dans le mode de réalisation avantageux illustré aux figures 8 et 14, la première platine 6 est fixée à la deuxième platine 7 au moyen d'une tige 14.

Il est particulièrement avantageux de prévoir que la deuxième platine 7 referme la cavité définie dans le galet 2. Il est préférable que le dispositif de détection de vitesse soit muni d'un joint 15 de section annulaire qui relie le galet 2 et la deuxième platine 7. Il est avantageux que la paroi latérale interne 2a du galet 2 possède une rainure 16 qui s'étend circulairement. Le joint 15 s'insère dans la rainure 16 de manière à réaliser l'étanchéité. Le joint 15 qui relie la deuxième platine 7 avec le galet 2 en association avec un galet 2 qui est borgne permet de former un espace sensiblement étanche ce qui permet d'améliorer la durée de vie du dispositif de détection.

Dans un mode de réalisation particulier, un bouton 17 est fixé au corps et préférentiellement à la deuxième platine 7 et est monté mobile par rapport à la deuxième platine 7. Le boutons 17 est mobile entre une première position de bouton et une deuxième position de bouton. Le bouton 17 est monté mobile par rapport au premier axe de rotation AA. Dans la première position de bouton, le bouton 17 l'interagit pas avec le pion 4 qui fonctionne comme cela a été décrit plus haut. Dans la deuxième position de bouton, le bouton 17 cause le blocage du galet 2 lorsque le galet 2 tourne dans le premier sens de rotation.

Le pion 4 est muni d'un téton 18. Il est avantageux que le téton ne soit pas en vis-à-vis de la deuxième zone de blocage 4a dans un plan perpendiculaire au premier axe de rotation AA. Le téton 18 peut être monté saillant de l'élément de cliquet 4c ou de la portion masselotte 4b selon une direction parallèle au premier axe de rotation AA. Le téton 18 est préférentiellement monté fixement sur le pion 4. Le téton 18 tourne autour du premier axe de rotation 3 lorsque le galet 2 tourne autour du premier axe de rotation 3. Le téton 18 se déplace entre une première position de téton et une deuxième position de téton. Le téton 18 tourne autour du premier axe de rotation AA à une distance premier axe de rotation AA qui est supérieure ou égale à une première valeur. La première valeur correspond à la distance minimale entre le premier axe de rotation AA et le téton 18 quand le pion 4 est dans la première position de pion, par exemple le galet 2 est immobile. Lorsque le pion 4 est dans la deuxième position de pion, le téton 18 est espacé du premier axe de rotation d'une deuxième valeur supérieure à la première valeur. Le volume annulaire possède un rayon maximal qui correspond à la deuxième valeur.

Le bouton 17 définit une glissière 19. Dans la première position de bouton 17, la glissière 19 est disposée de manière à ne pas venir en contact du téton 18, elle ne forme pas obstacle à la rotation du téton 18. Le téton 18 tourne dans un plan qui est perpendiculaire au premier axe de rotation AA. Dans la première position de bouton, la glissière 19 est disposée hors du plan de rotation du téton 18 et/ou à une distance de l'axe de rotation AA qui est inférieure à la première valeur ou qui est supérieure à la deuxième valeur, par exemple supérieure au rayon du galet 2. La glissière 19 est disposée hors des positions que peut prendre le téton 18 lorsque le galet tourne.

Dans la deuxième position de bouton 17, la glissière 19 est disposée pour former un obstacle au déplacement du téton 18. La glissière 19 se trouve dans le plan de rotation du téton 18, c'est-à-dire dans un plan perpendiculaire au premier axe de rotation AA et qui passe par le téton 18. La glissière 19 forme un obstacle qui s'étend depuis la première valeur jusqu'à une troisième valeur plus importante que la première valeur. Lors d'un tour de galet 2, le téton 18 glisse le long de la glissière en déplaçant le pion dans la deuxième position de pion. La troisième valeur peut être la deuxième valeur ce qui correspond au pion dans la deuxième position de pion. En alternative, la troisième valeur correspond au pion 4 dans une position telle que la distance entre le premier axe de rotation AA et la partie distale de la deuxième zone de contact 4a est supérieure à la distance entre le premier axe de rotation AA et la partie proximale de la première zone de contact 5a. Dans cette configuration, l'élément de cliquet 4c est assez éloigné du premier axe de rotation AA pour que l'élément de cliquet 4c vienne en contact du bloqueur 5 ce qui va entrainer le blocage du galet 2.

De manière avantageuse, lorsque le pion 4 est dans la deuxième position de pion et que le bouton est dans la deuxième position de bouton, la glissière 19 est dépourvue de contact avec le téton 18 de manière à éviter que la glissière 19 et le téton 18 reprennent les efforts de blocage du galet 2.

Lorsque le galet 2 tourne selon le premier sens de rotation et que le bouton 17 est dans la deuxième position de bouton, le téton 18 entre en contact avec la glissière 19. La rotation du galet selon le premier sens de rotation cause le glissement du téton 18 le long de la glissière 19 et le glissement du téton 18 le long de la glissière entraine le déplacement de l'élément de cliquet 4c qui s'éloigne du premier axe de rotation AA, c'est-à-dire qui se rapproche de la position correspondant à la deuxième position de pion.

Lorsque le téton 18 est dans la première position de téton, le pion 4 est dans la première position de pion. Lorsque le téton 18 est dans la deuxième position de téton, le pion 4 est dans la deuxième positon de pion. Le téton 18 est monté fixement par rapport à la deuxième zone de contact 4a.

De manière avantageuse, lorsque le bouton 17 se déplace entre la première et la deuxième position de bouton, la glissière 19 se déplace uniquement dans un plan perpendiculaire au premier axe de rotation AA. Préférentiellement, le bouton 17 est monté mobile de manière à se rapprocher ou s'éloigner du premier arbre de rotation 3 entre la première position de bouton et la deuxième position de bouton.

Le déplacement du pion depuis la première position jusqu'à la deuxième position est indépendant de la vitesse de rotation du galet 2. Le blocage du galet 2 est obtenu au plus tard lorsque le galet a effectué un tour complet.

Un tel bouton est particulièrement avantageux car il est simple à réaliser tout en étant très efficace. Bien que le bouton et le téton soient présentés en association avec un pion étagé, il est possible d'utiliser une autre configuration de pion. De manière préférentielle, le téton 18 n'est pas en vis-à-vis de la deuxième zone de contact 4a dans un plan qui est perpendiculaire au premier axe de rotation AA.

Dans les modes de réalisation avantageux illustrés, lorsque le pion est installé à l'intérieur de la cavité définie par le galet 2, le bouton 17 traverse la deuxième platine 7 de sorte que le bouton 17 définisse une glissière 19 pour le téton 18 qui est séparée de la zone d'actionnement du bouton par la deuxième platine 7. Le téton 18 glisse le long de la glissière 19.

Dans la première position de bouton, ce qui correspond à une première position de glissière lorsque la vitesse de rotation du galet 2 est faible, le téton 18 tourne autour du premier axe de rotation AA et le téton 18 ne vient pas en contact de la glissière 19. Au fur et à mesure que la vitesse de rotation du galet 2 augmente jusqu'à atteindre la vitesse seuil, le téton 18 se déplace de la première position de téton 18 vers la deuxième position de téton 18 sans que le téton 18 ne viennent en contact de la glissière 19. Lorsque la vitesse de rotation du galet 2 atteint la vitesse seuil, le pion 4 arrive en contact du bloqueur 5 ce qui bloque le galet 2 sans que le téton 18 vienne en contact de la glissière 19.

Dans la deuxième position de bouton 17, ce qui correspond à une deuxième position de glissière, la glissière 19 vient couper la trajectoire du téton 18 lorsque le galet 2 tourne selon le premier sens de rotation. Au fur et à mesure que le galet 2 tourne autour du premier axe de rotation, le téton 18 tourne autour du premier axe de rotation et il glisse le long de la glissière 19 ce qui entraine le déplacement du téton 18 de la première position de téton jusqu'à la deuxième position de téton. Une fois la deuxième position de téton atteinte, l'élément de cliquet 4c est en contact du bloqueur 5 ce qui finit de déplacer le pion 4 vers dans la deuxième position de pion. La rotation du galet 2 fait que la première surface de contact 5a se trouve en contact de la deuxième surface de contact 4a ce qui a pour effet de bloquer le galet 2.

Dans la deuxième position de bouton, le bouton 17 définit une glissière 19 qui intercepte la trajectoire du téton 18 ce qui décale le téton 18 de manière à déplacer le pion 4 dans la deuxième position de pion et ainsi réaliser le blocage du galet 2 indépendamment de la vitesse de rotation du galet 2. Lorsque le galet 2 réalise un tour ou moins d'un tour de galet, le bouton 17 se déplace de la première position de pion jusqu'à la deuxième position de pion ce qui permet de bloquer le galet 2 indépendamment de la vitesse de rotation du galet 2.

Cette solution est particulièrement avantageuse car le même pion 4 est utilisé pour bloquer le galet 2 soit lorsque la vitesse de rotation du galet 3 atteint la vitesse seuil, soit lorsque le galet 2 fait un tour lorsque le bouton 17 est déplacé vers une position de blocage du galet 2.

Dans un mode de réalisation particulier, lorsque le pion 4 arrive en appui contre la butée 9 du galet 2, la glissière 19 quitte le téton 18 de sorte que les efforts appliqués par le galet 2 contre le bloqueur 5 ne sont pas transmis à la glissière 19.

Il est avantageux que le bouton 17 soit monté mobile en rotation pour déplacer la glissière 19.

La configuration illustrée dans les figures 1 à 14 est avantageuse car elle possède un nombre réduit de pièces ce qui réduit le risque le taux de défaillance.

Le dispositif de détection de la vitesse de rotation du galet fait avantageusement partie d'un dispositif antichute. Le dispositif antichute peut comporter une corde installée dans le support en contact du galet 2. Le dispositif antichute est configuré pour empêcher le dispositif antichute de circuler le long de la corde selon une vitesse linéaire qui est supérieure à une vitesse seuil. La corde étant en contact du galet, la vitesse de défilement entre la corde et le dispositif antichute correspond à une vitesse de rotation du galet. On fait circuler l'élément filaire dans le dispositif de blocage ce qui fait tourner le galet. Lorsque la vitesse de rotation du galet 2 atteint la vitesse seuil de rotation, le galet 2 se bloque.

Dans les modes de réalisation illustré, le galet 2 est configuré pour coopérer avec une corde de section circulaire, mais il est également possible de prévoir un galet destiné à coopérer avec une sangle dont la section est carrée ou rectangulaire. Le dispositif de détection est particulièrement adapté à être utilisé dans un dispositif de blocage d'un élément filaire, notamment une corde, mais il est également possible de prévoir son utilisation dans un enrouleur automatique.

## Revendications

1. Dispositif de détection configuré pour détecter la vitesse de rotation d'un galet (2) d'un dispositif de blocage (1) d'un élément filaire comportant :
- un corps (6,7) ;
- un premier arbre de rotation (3) fixé au corps (6,7) ;
- un galet (2) monté rotatif autour du premier arbre de rotation (3), le premier arbre de rotation (3) définissant un premier axe de rotation (AA) pour le galet (2) ;
- un bloqueur (5) fixé au corps (6,7) et ayant une première surface de contact (5a) ;
- au moins un pion (4) fixé au galet (2) de manière à tourner autour du premier axe de rotation (AA) dans un volume annulaire disposé entre le premier axe de rotation (AA) et le bloqueur (5), le au moins un pion (4) possédant une deuxième surface de contact (4a), le au moins un pion (4) étant monté mobile par rapport au premier axe de rotation (AA) entre une première position de pion dans laquelle une première distance entre le premier axe de rotation (AA) et une partie distale de la deuxième zone de contact (4a) est inférieure à une deuxième distance entre le premier axe de rotation (AA) et une partie proximale de la première surface de contact (5a) et une deuxième position de pion dans laquelle la première distance est supérieure à la deuxième distance, la rotation du galet (2) générant une force centrifuge destinée à éloigner la deuxième surface de contact (4a) du premier axe de rotation (AA) pour augmenter la valeur de la première distance de sorte que la deuxième surface de contact (4a) soit en contact de la première surface de contact (5a) lorsque la vitesse de rotation du galet (2) dépasse une vitesse de rotation seuil, le bloqueur (5) bloquant un sens de rotation du galet (2) lorsque la première surface de contact (5a) est en contact de la deuxième surface de contact (4a) ;
dispositif de détection **caractérisé en ce que** le pion (4) possède une portion masselotte (4b) et un élément de cliquet (4c) disposés l'un après l'autre selon une direction parallèle au premier axe de rotation (AA), l'élément de cliquet (4c) comportant la deuxième surface de contact (4a) ;
**en ce que**, dans la deuxième position de pion, la portion masselotte (4b) est dépourvue de contact avec le bloqueur (5) ; et
**en ce qu'**une partie distale de la portion masselotte (4b) est plus éloignée du premier axe de rotation (AA) qu'une partie distale de la deuxième surface de contact (4a) dans une observation selon le premier axe de rotation (AA).

2. Dispositif de détection selon la revendication 1 dans lequel, dans la première position de pion, une distance radiale entre le premier axe de rotation (AA) et la partie distale de la portion masselotte (4b) est supérieure à une distance radiale entre le premier axe de rotation (AA) et une partie proximale de la première surface de blocage (5a).

3. Dispositif de détection selon l'une des revendications 1 et 2 dans lequel le galet (2) est creux et le bloqueur (5) est disposé à l'intérieur du galet (2).

4. Dispositif de détection selon la revendication 3 dans lequel, le pion (4) est monté mobile à rotation autour d'un deuxième arbre de rotation (8) entre la première position de pion et la deuxième position de pion, le deuxième arbre de rotation (8) étant fixé au galet et monté mobile à rotation autour du premier arbre de rotation (3) à l'intérieur du galet (2).

5. Dispositif de détection selon l'une quelconque des revendications 3 et 4 dans lequel la portion masselotte (4b) est disposée à l'intérieur du galet (2).

6. Dispositif de détection selon l'une quelconque des revendications 1 à 5 dans lequel le pion (4) est monté mobile à rotation autour d'un deuxième arbre de rotation (8) entre la première position de pion et la deuxième position de pion, dans lequel une butée (9) est montée fixement au galet (2), la butée (9) étant en contact de l'élément de cliquet (4c) lorsque le pion est dans la deuxième position de pion pour réduire la sollicitation mécanique sur le deuxième arbre de rotation (8).

7. Dispositif de détection selon la revendication 6 dans lequel, l'élément de cliquet (4c) et le deuxième arbre de rotation (8) définissent un jeu fonctionnel au moins selon un arc de cercle dont le premier axe de rotation (AA) est le centre pour réduire la sollicitation mécanique sur le deuxième arbre de rotation (8).

8. Dispositif de détection selon l'une quelconque des revendications 1 à 7 dans lequel le corps comporte un premier flasque (6) et un deuxième flasque (7), le premier arbre de rotation (3) étant fixé au premier flasque (6) et au deuxième flasque (7), le galet (2) étant disposé entre le premier flasque (6) et le deuxième flasque (7) et dans lequel le bloqueur (5) est monté fixement sur le deuxième flasque (7).

9. Dispositif de détection selon l'une quelconque des revendications 1 à 8 comportant :
- un téton (18) en saillie du pion (4) selon une direction parallèle au premier axe de rotation (AA) ;
- un bouton (17) fixé au corps (6,7) et monté mobile entre une première position de bouton et une deuxième position de bouton, le bouton (17) possédant une glissière (19) ; et
dans lequel, dans la première position de bouton, la glissière (19) est disposée pour ne pas former obstacle à la rotation du téton (18) autour du premier axe de rotation (AA) ; et
dans lequel, dans la deuxième position de bouton, lors d'un tour du galet (2), le téton (18) glisse le long de la glissière (19) en déplaçant le pion (4) au moins jusqu'à une position de pion où la distance entre le premier axe de rotation (AA) et la partie distale de la deuxième zone de contact (4a) soit supérieure à la distance entre le premier axe de rotation (AA) et la partie proximale de la première surface de contact (5a).

10. Dispositif de détection selon la revendication 9 dans lequel, dans la deuxième position de pion et dans la deuxième position de bouton, le téton (18) n'est pas en contact de la glissière (19).

11. Dispositif de détection selon l'une quelconque des revendications 1 à 10 dans lequel la portion masselotte (4b) est montée fixement par rapport à la deuxième surface de contact (4a).

12. Dispositif de blocage d'un élément filaire comportant un dispositif de détection selon l'une quelconque des revendications précédentes.

13. Procédé de blocage d'un élément filaire comportant les étapes suivantes :
- fournir un dispositif de blocage selon la revendication 12 et un élément filaire monté dans le dispositif de blocage en contact avec le galet (2) ;
- faire circuler l'élément filaire à l'intérieur du dispositif de blocage de manière à faire tourner le galet (2) jusqu'à une vitesse de rotation seuil pour bloquer le galet (2) et bloquer l'élément filaire à l'intérieur du dispositif de blocage (1).

## Patentansprüche

1. Detektionsvorrichtung, die dazu konfiguriert ist, die Drehgeschwindigkeit einer Rolle (2) einer Sperrvorrichtung (1) für ein Seilelement zu erfassen, umfassend:
- einen Körper (6,7);
- eine erste Drehwelle (3), die am Körper (6,7) befestigt ist;
- eine Rolle (2), die um die erste Drehwelle (3) drehbar montiert ist, wobei die erste Drehwelle (3) eine erste Drehachse (AA) für die Rolle (2) definiert;
- einen Blockierer (5), der am Körper (6, 7) befestigt ist und eine erste Kontaktfläche (5a) aufweist;
- mindestens einen Zapfen (4), der derart an der Rolle (2) befestigt ist, dass er sich in einem ringförmigen Volumen, das zwischen der ersten Drehachse (AA) und dem Blockierer (5) angeordnet ist, um die erste Drehachse (AA) dreht, wobei der mindestens eine Zapfen (4) eine zweite Kontaktfläche (4a) aufweist, der mindestens eine Zapfen (4) in Bezug auf die erste Drehachse (AA) zwischen einer ersten Zapfenposition, in welcher ein erster Abstand zwischen der ersten Drehachse (AA) und einem distalen Teil des zweiten Kontaktbereichs (4a) kleiner ist als ein zweiter Abstand zwischen der ersten Drehachse (AA) und einem proximalen Teil der ersten Kontaktfläche (5a), und einer zweiten Zapfenposition, in welcher der erste Abstand größer ist als der zweite Abstand, beweglich montiert ist, wobei die Drehung der Rolle (2) eine Zentrifugalkraft erzeugt, die die zweite Kontaktfläche (4a) von der ersten Drehachse (AA) entfernt, um den Wert des ersten Abstands so zu erhöhen, dass die zweite Kontaktfläche (4a) mit der ersten Kontaktfläche (5a) in Kontakt ist, wenn die Drehgeschwindigkeit der Rolle (2) eine Schwellendrehgeschwindigkeit übersteigt, wobei der Blockierer (5) eine Drehrichtung der Rolle (2) sperrt, wenn die erste Kontaktfläche (5a) mit der zweiten Kontaktfläche (4a) in Kontakt ist;
wobei die Detektionsvorrichtung **dadurch gekennzeichnet ist, dass** der Zapfen (4) einen Fliehgewichtsabschnitt (4b) und ein Klinkenelement (4c) aufweist, die in einer Richtung parallel zur ersten Drehachse (AA) nacheinander angeordnet sind, wobei das Klinkenelement (4c) die zweite Kontaktfläche (4a) umfasst;
dass der Fliehgewichtsabschnitt (4b) in der zweiten Zapfenposition nicht mit dem Blockierer (5) in Kontakt ist; und
dass ein distaler Teil des Fliehgewichtsabschnitts (4b) entlang der ersten Drehachse (AA) gesehen weiter von der ersten Drehachse (AA) entfernt ist als ein distaler Teil der zweiten Kontaktfläche (4a).

2. Detektionsvorrichtung nach Anspruch 1, wobei ein radialer Abstand zwischen der ersten Drehachse (AA) und dem distalen Teil des Fliehgewichtsabschnitts (4b) in der ersten Zapfenposition größer ist als ein radialer Abstand zwischen der ersten Drehachse (AA) und einem proximalen Teil der ersten Blockierfläche (5a).

3. Detektionsvorrichtung nach einem der Ansprüche 1 und 2, wobei die Rolle (2) hohl ist und der Blockierer (5) im Inneren der Rolle (2) angeordnet ist.

4. Detektionsvorrichtung nach Anspruch 3, wobei der Zapfen (4) zwischen der ersten Zapfenposition und der zweiten Zapfenposition um eine zweite Drehwelle (8) drehbar montiert ist, wobei die zweite Drehwelle (8) an der Rolle befestigt ist und im Inneren der Rolle (2) um die erste Drehwelle (3) drehbar montiert ist.

5. Detektionsvorrichtung nach einem der Ansprüche 3 und 4, wobei der Fliehgewichtsabschnitt (4b) im Inneren der Rolle (2) angeordnet ist.

6. Detektionsvorrichtung nach einem der Ansprüche 1 bis 5, wobei der Zapfen (4) zwischen der ersten Zapfenposition und der zweiten Zapfenposition um eine zweite Drehwelle (8) drehbar montiert ist, wobei ein Anschlag (9) fest an der Rolle (2) angebracht ist, wobei der Anschlag (9) mit dem Klinkenelement (4c) in Kontakt ist, wenn der Zapfen sich in der zweiten Zapfenposition befindet, um die mechanische Beanspruchung der zweiten Drehwelle (8) zu reduzieren.

7. Detektionsvorrichtung nach Anspruch 6, wobei das Klinkenelement (4c) und die zweite Drehwelle (8) mindestens entlang eines Kreisbogens, dessen Mittelpunkt die erste Drehachse (AA) ist, ein Funktionsspiel definieren, um die mechanische Beanspruchung der zweiten Drehwelle (8) zu reduzieren.

8. Detektionsvorrichtung nach einem der Ansprüche 1 bis 7, wobei der Körper einen ersten Flansch (6) und einen zweiten Flansch (7) umfasst, wobei die erste Drehwelle (3) am ersten Flansch (6) und am zweiten Flansch (7) befestigt ist, die Rolle (2) zwischen dem ersten Flansch (6) und dem zweiten Flansch (7) angeordnet ist, und wobei der Blockierer (5) fest am zweiten Flansch (7) angebracht ist.

9. Detektionsvorrichtung nach einem der Ansprüche 1 bis 8, umfassend :
- einen Stift (18), der in einer Richtung parallel zur ersten Drehachse (AA) vom Zapfen (4) vorspringt;
einen Knopf (17), der am Körper (6, 7) befestigt ist und zwischen einer ersten Knopfposition und einer zweiten Knopfposition beweglich montiert ist, wobei der Knopf (17) eine Gleitffläche (19) aufweist; und
wobei die Gleitffläche (19) in der ersten Knopfposition derart angeordnet ist, dass sie kein Hindernis für die Drehung des Stifts (18) um die erste Drehachse (AA) bildet; und
wobei in der zweiten Knopfposition der Stift (18) bei einer Umdrehung der Rolle (2) entlang der Gleitffläche (19) gleitet und den Zapfen (4) dabei mindestens in eine Zapfenposition bewegt, in welcher der Abstand zwischen der ersten Drehachse (AA) und dem distalen Teil der zweiten Kontaktfläche (4a) größer ist als der Abstand zwischen der ersten Drehachse (AA) und dem proximalen Teil der ersten Kontaktfläche (5a).

10. Detektionsvorrichtung nach Anspruch 9, wobei der Stift (18) in der zweiten Zapfenposition und in der zweiten Knopfposition nicht mit der Gleitffläche (19) in Kontakt ist.

11. Detektionsvorrichtung nach einem der Ansprüche 1 bis 10, wobei der Fliehgewichtsabschnitt (4b) in Bezug auf die zweite Kontaktfläche (4a) fest angebracht ist.

12. Sperrvorrichtung für ein Seilelement, umfassend eine Detektionsvorrichtung nach einem der vorherigen Ansprüche.

13. Verfahren zum Blockieren eines Seilelements, umfassend die folgenden Schritte:
- Bereitstellen einer Sperrvorrichtung nach Anspruch 12 und eines Seilelements, das in der Sperrvorrichtung mit der Rolle (2) in Kontakt montiert ist;
- Laufenlassen des Seilelements in der Sperrvorrichtung, sodass die Rolle (2) bis zu einer Schwellendrehzahl gedreht wird, um die Rolle (2) zu blockieren und das Seilelement in der Sperrvorrichtung (1) zu blockieren.

## Claims

1. Detection device configured to detect the speed of rotation of a roller (2) of a clamping device (1) of a wire element comprising:
- a body (6,7);
- a first rotation shaft (3) fixed to a body (6,7)
- a roller (2) mounted rotating around a first rotation shaft (3), the first rotation shaft (3) defining a first axis of rotation (AA) for the roller (2);
- a clamp (5) fixed to the body (6,7) and having a first contact surface (5a);
- at least one member (4) fixed to the roller (2) so as to rotate around the first axis of rotation (AA) in an annular volume arranged between the first axis of rotation (AA) and the clamp (5), the at least one member (4) having a second contact surface (4a), the at least one member (4) being mounted movable with respect to the first axis of rotation (AA) between a first member position in which a first distance between the first axis of rotation (AA) and a distal part of the second contact surface (4a) is smaller than a second distance between the first axis of rotation (AA) and a proximal part of the first contact surface (5a) and a second member position in which the first distance is greater than the second distance, rotation of the roller (2) generating a centrifugal force designed to move the second contact surface (4a) away from the first axis of rotation (AA) to increase the value of the first distance so that the second contact surface (4a) is in contact with the first contact surface (5a) when the speed of rotation of the roller (2) exceeds a threshold speed of rotation, the clamp (5) blocking one direction of rotation of the roller (2) when the first contact surface (5a) is in contact with the second contact surface (4a);
detection device **characterised in that** the member (4) has a flyweight portion (4b) and a ratchet element (4c) arranged one after the other in a direction parallel to the first axis of rotation (AA), the ratchet element (4c) comprising the second contact surface (4a);
**in that**, in the second member position, the flyweight portion (4b) is devoid of contact with the clamp (5);
and **in that** a distal part of the flyweight portion (4b) is farther from the first axis of rotation (AA) than a distal part of the second contact surface (4a) in an observation along the first axis of rotation (AA).

2. Detection device according to claim 1 wherein, in the first member position, a radial distance between the first axis of rotation (AA) and the distal part of the flyweight portion (4b) is greater than a radial distance between the first axis of rotation (AA) and a proximal part of the first clamping surface (5a).

3. Detection device according to one of claims 1 and 2 wherein the roller (2) is hollow and the clamp (5) is arranged inside the roller (2).

4. Detection device according to claim 3 wherein the member (4) is mounted rotatable around a second rotation shaft (8) between the first member position and the second member position, the second rotation shaft (8) being fixed to the roller (2) and mounted rotatable around the first rotation shaft (3) inside the roller (2).

5. Detection device according to either one of claims 3 and 4 wherein the flyweight portion (4b) is arranged inside the roller (2).

6. Detection device according to any one of claims 1 to 5 wherein the member (4) is mounted rotatable around a second rotation shaft (8) between the first member position and the second member position, wherein a stop (9) is mounted fixedly on the roller (2), the stop (9) being in contact with the ratchet element (4c) when the member is in the second member position to reduce the mechanical stress on the second rotation shaft (8).

7. Detection device according to claim 6 wherein the ratchet element (4c) and the second rotation shaft (8) define a functional clearance at least in the form of an arc of a circle the first axis of rotation (AA) of which is the centre to reduce the mechanical stress on the second rotation shaft (8).

8. Detection device according to any one of claims 1 to 7 wherein the body comprises a first flange (6) and a second flange (7), the first rotation shaft (3) being fixed to the first flange (6) and to the second flange (7), the roller (2) being located between the first flange (6) and the second flange (7), and wherein the clamp (5) is mounted fixedly on the second flange (7).

9. Detection device according to any one of claims 1 to 8 comprising:
- a pin (18) salient from the member (4) in a direction parallel to the first axis of rotation (AA);
- a button (17) fixed to the body (6,7) and mounted movable between a first button position and a second button position, the button (17) having a slide (19);
and wherein, in the first button position, the slide (19) is arranged so as not to form an obstacle to rotation of the pin (18) around the first axis of rotation (AA);
and wherein, in the second button position, when the roller (2) makes a turn, the pin (18) slides along the slide (19) moving the member (4) at least to a member position where the distance between the first axis of rotation (AA) and the distal part of the second contact surface (4a) is greater than the distance between the first axis of rotation (AA) and the proximal part of the first contact surface (5a).

10. Detection device according to claim 9 wherein, in the second member position and in the second button position, the pin (18) is not in contact with the slide (19).

11. Detection device according to any one of claims 1 to 10 wherein the flyweight portion (4b) is mounted fixedly with respect to the second contact surface (4a).

12. Clamping device of a wire element comprising a detection device according to any one of the foregoing claims.

13. Method for clamping a wire element comprising the following steps:
- providing a clamping device according to claim 12 and a wire element fitted in the clamping device in contact with the roller (2);
- making the wire element run inside the clamping device so as to make the roller (2) rotate up to a threshold speed of rotation to block the roller (2) and block the wire element inside the clamping device (1).
